# EUROPEAN PATENT SPECIFICATION

(11) **EP 2 175 162 B1**
(45) Date of publication and mention of the grant of the patent: **03.08.2011**
(21) Application number: 08777325.5
(22) Date of filing: 18.06.2008
(51) Int. Cl.: F16F 15/121, F16D 7/02, F16F 15/12

(54) **POWER TRANSMISSION DEVICE**
KRAFTÜBERTRAGUNGSVORRICHTUNG
DISPOSITIF DE TRANSMISSION DE PUISSANCE

(30) Priority: 07.08.2007 JP 2007204902
(43) Date of publication of application: 14.04.2010
(73) Proprietor: Sanden Corporation, Isesaki-shi, Gunma 372-8502 (JP)
(72) Inventor: TAKABE, Tetsuya, Isesaki-shi Gunma 372-8502 (JP)
(74) Representative: Prüfer & Partner GbR European Patent Attorneys
(86) International application number: PCT/JP2008/061126
(87) International publication number: WO 2009/019937

(56) References cited:
- EP-A1- 0 359 916
- JP-A- 2004 293 692
- JP-A- 2006 207 637
- JP-A- 2007 100 893
- US-A- 1 360 555
- US-A- 3 387 505
- US-A- 5 660 590
- US-B1- 6 200 221

## Description

### Technical Field

The present invention relates to a power transmission device for use with a compressor of a car air conditioner, etc.

### Background Art

Patent Document No.1 teaches a power transmission device comprising a driving side rotating member driven by an external power source, a driven side rotating member fixed to a rotating shaft of a driven side piece of equipment, and a resiliently deformed plate spring fixed to the driving side rotating member at one end and detachably clamped by the driven side rotating member and a clamping member fixed to the driven side rotating member at the other end.
In the power transmission device disclosed in Patent Document No.1, torque of the external power source is transmitted from the driving side rotating member to the driven side rotating member through the plate spring. When the rotating shaft of the driven side piece of equipment is overloaded and its rotation is restricted, the other end of the plate spring is released from the clamping by the driven side rotating member and the clamping member, the plate spring is restored to its initial shape to be distanced from the driven side rotating member and the clamping member, and the connection between the driving side rotating member and the driven side rotating member is released. Thus, the driven side piece of equipment is protected from damage.
Patent Document No.1: Japanese Patent No.3421619

### Disclosure of invention

### Problem to be solved

The power transmission device of Patent Document No.1 has a problem in that vibration in the direction along the longitudinal axis of the rotating shaft of the driven side piece of equipment transmitted from the external power source to the driving side rotating member is transmitted to the driven side rotating member through the plate spring to cause vibration of the driven side piece of equipment and noise due to the vibration.
The object of the present invention is to provide a power transmission device comprising a driving side rotating member driven by an external power source, a driven side rotating member fixed to a rotating shaft of a driven side piece of equipment, and a plate spring fixed to the driving side rotating member at one end and detachably clamped by the driven side rotating member and a clamping member fixed to the driven side rotating member at the other end, wherein the vibration in the direction along the longitudinal axis of the rotating shaft of the driven side piece of equipment transmitted from the external power source to the driving side rotating member is not easily transmitted to the driven side rotating member.
Another object of the present invention is to provide a power transmission device comprising a driving side rotating member driven by an external power source, a driven side rotating member fixed to a rotating shaft of a driven side piece of equipment, and a plate spring fixed to the driven side rotating member at one end and detachably clamped by the driving side rotating member and a clamping member fixed to the driving side rotating member at the other end, wherein the vibration in the direction along the longitudinal axis of the rotating shaft of the driven side piece of equipment transmitted from the external power source to the driving side rotating member is not easily transmitted to the driven side rotating member.

### Means for Achieving the Object

In accordance with the present invention, there is provided a power transmission device comprising a driving side rotating member driven by an external power source, a driven side rotating member fixed to a rotating shaft of a driven side piece of equipment, and a resiliently deformed plate spring fixed to the driving side rotating member at one end and detachably clamped by the driven side rotating member and a clamping member fixed to the driven side rotating member at the other end, wherein the plate spring is made of clamping alloy.
In accordance with another aspect of the present invention, there is provided a power transmission device comprising a driving side rotating member driven by an external power source, a driven side rotating member fixed to a rotating shaft of a driven side piece of equipment, and a resiliently deformed plate spring fixed to the driven side rotating member at one end and detachably clamped by the driving side rotating member and a clamping member fixed to the driving side rotating member at the other end, wherein the plate spring is made of damping alloy.
In the power transmission device in accordance with the present invention, the plate spring for transmitting the torque from the driving side rotating member to the driven side rotating member exhibits vibration damping function. Therefore, the vibration in the direction along the longitudinal axis of the rotating shaft of the driven side piece of equipment transmitted from the external power source to the driving side rotating member is not easily transmitted to the driven side rotating member. Thus, the vibration of the driven side piece of equipment and the noise generated by the vibration are prevented.

The plate spring must exhibit not only vibration damping function but also mechanical strength. Alloys such as Mn-Cu alloy, Ni-Ti alloy, Cu-Al-Ni alloy, Cu-Al-Mn alloy, etc., exhibit not only vibration damping function but also mechanical strength.

### Effect of the Invention

In the power transmission device in accordance with the present invention, the plate spring for transmitting the torque from the driving side rotating member to the driven side rotating member exhibits vibration damping function. Therefore, the vibration in the direction along the longitudinal axis of the rotating shaft of the driven side piece of equipment transmitted from the external power source to the driving side rotating member is not easily transmitted to the driven side rotating member. Thus, the vibration of the driven side piece of equipment and the noise generated by the vibration are prevented.

### Best Mode for Carrying Out the Invention

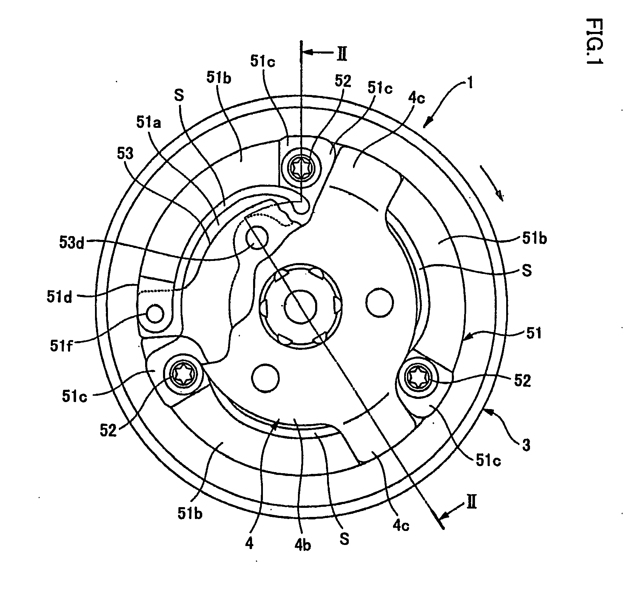

Preferred embodiments of the present invention will be described with reference to Figures 1 to 5.
A power transmission device 1 comprises a pulley 3 rotatably fitted on a boss portion 101a of the housing 101 of a compressor 100 for use with a car air conditioner through a bearing 2, a hub 4 fixed to a rotating shaft 102 of the compressor 100, a torque transmission mechanism 5 for transmitting torque from the pulley 3 to the hub 4, and a damper mechanism 6 for connecting the torque transmission mechanism 5 with the pulley 3.

The pulley 3 comprises an annular plate portion 3a, an outer cylindrical portion 3b united with the annular plate portion 3a, and an inner cylindrical portion 3c united with the annular plate portion 3a. Torque is transmitted from a car engine to the outer cylindrical portion 3b through a V-belt. The car engine and the V-belt are not shown in Figures. The inner cylindrical portion 3c is rotatably supported by the bearing 2.

The hub 4 comprises a boss portion 4a splined to the tip portion of the rotating shaft 102 passing through the boss portion 101a of the housing 101 and projecting out of the housing 101 and fixed to the tip portion of the rotating shaft 102 by a bolt 7, an annular plate portion 4b connected to the boss portion 4a at inner periphery, and three clamping portions 4c disposed circumferentially distanced from each other and projecting radially outward from the outer periphery of the annular plate portion 4b.

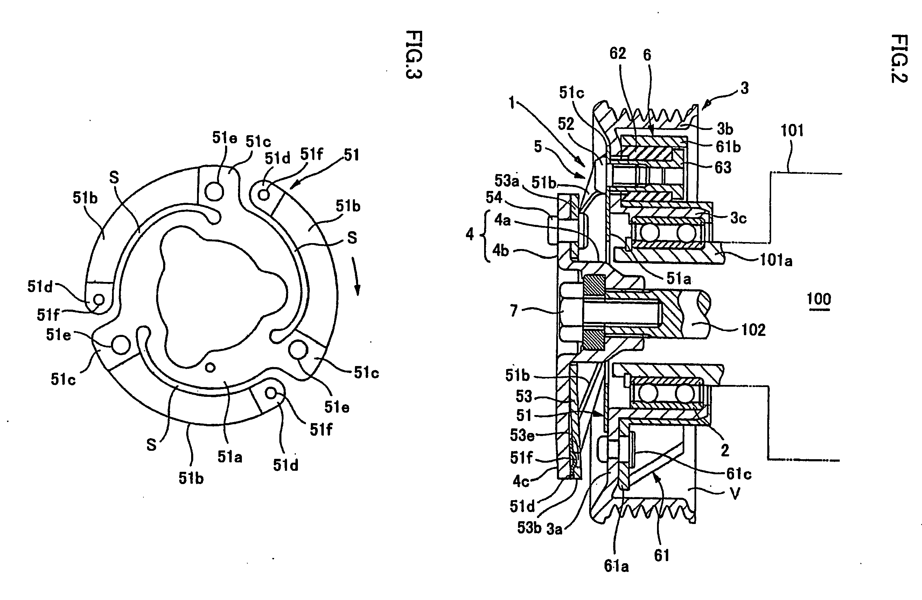

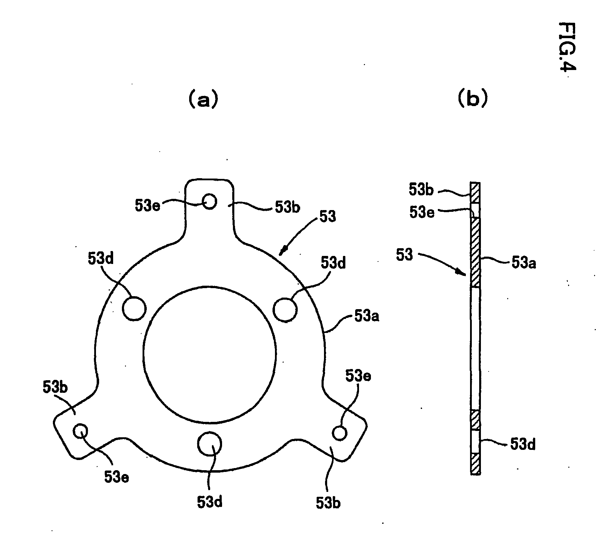

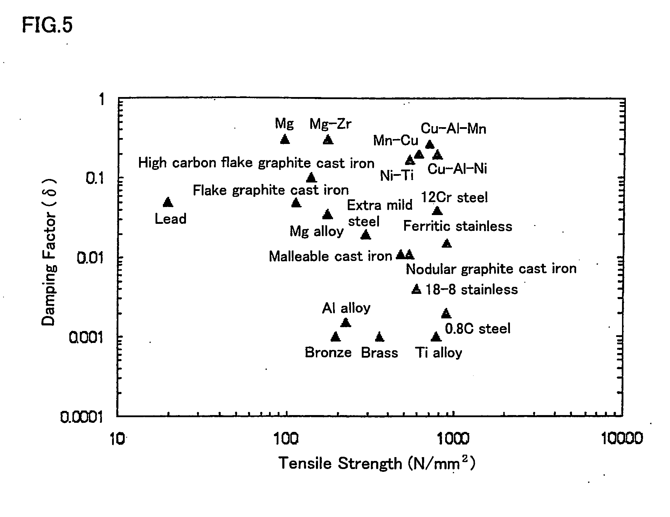

The torque transmission mechanism 5 comprises a plate spring 51 inserted between the pulley 3 and the hub 4 to connect them with each other, screws 52 for fixing the plate spring 51 to the pulley 3 through the damper mechanism 6, a clamping member 53 for cooperating with the clamping portions 4c of the hub 4 to detachably clamp the plate spring 51 resiliently deformed in the direction along the longitudinal axis of the rotating shaft 102, and rivets 54 for fixing the clamping member 53 to the annular plate portion 4b of the hub 4.
The plate spring 51 is formed by a plate made of damping alloy with high mechanical strength such as Mn-Cu alloy, Ni-Ti alloy, Cu-Al-Ni alloy, Cu-Al-Mn alloy, etc. Mechanical properties of various kinds of alloys are shown in Figure 5. As seen in Figure 5, damping alloys with high mechanical strength such as Mn-Cu alloy, Ni-Ti alloy, Cu-Al-Ni alloy, Cu-Al-Mn alloy, etc exhibit high mechanical strength and high vibration damping function. All of the aforementioned damping alloys with high mechanical strength are commercially available. As shown in Figure 3, the plate spring 51 comprises an annular main body 51a and three arm portions 51b distanced from the main body 51a by slits S and disposed radially outside the main body 51a, circumferentially distanced from each other, and extending along the outer periphery of the main body 51a. Each arm portion 51b is united with the main body 51a at one end 51c and made free at the other end 51d. Each arm portion 51b is provided with a hole 51e for engaging the screw 52 at one end 51c and a projection 51f at the other end 51d.
The clamping member 53 is made of spring steel plate. As shown in Figure 4, the clamping member 53 comprises an annular main body 53a and three clamping portions 53b disposed circumferentially distanced from each other and radially outwardly projecting from the outer periphery of the main body 53a. Holes 53d for engaging the rivets 54 are formed in the main body 53a circumferentially distanced from each other. A hole 53e for engaging one of the projections 51f of the plate spring 51 is formed in each of the clamping portions 53b. The clamping member 53 is fixed to the annular plate portion 4b of the hub 4 by passing the rivets 54 through the holes 53d and holes made in the annular plate portion 4b of the hub 4, thereafter flaring both ends of the rivets 54.

As shown in Figure 2, the damper mechanism 6 comprises a damper holding member 61 disposed in an annular space V formed between the cylinders 3b and 3c of the pulley 3, and three damper rubbers 62 disposed circumferentially distanced from each other and assembled with the damper holding member 61. The damper holding member 61 comprises an annular main body 61a and three cylindrical portions 61b disposed circumferentially distanced from each other and projecting from the annular main body 61a. The annular main body 61a is fixed to the annular plate portion 3a of the pulley 3 by a plurality of rivets 61c disposed circumferentially distanced from each other. The damper rubbers 62 are cylinders. Flanged nut members 63 provided with internal threads are fitted in the damper rubbers 62 to engage end faces of the damper rubbers 62 at flanges. The damper rubbers 62 are fitted in the cylindrical portions 61b together with the nut members 63.

As shown in Figures 1 and 2, the screws 52 passed through the holes 51e screw into the nut members 63 through holes formed in the annular plate portion 3a of the pulley 3. Thus, the arm portions 51b of the plate spring 51 of the torque transmission mechanism 5 are fixed to the annular plate portion 3a of the pulley 3 through nut members 63 and the damper rubbers 62 at one ends 51c. The arm portions 51b of the plate spring 51 of the torque transmission mechanism 5 are detachably clamped by the clamping portions 4c of the hub 4 and the clamping portions 53b of the clamping member 53 with the projections 51f fitting in the holes 53e of the clamping member 53. In this situation, the arm portions 51b are resiliently deformed in the direction along the longitudinal axis of the rotating shaft 102 and in the direction that the other ends 51d are distanced from the one ends 51c.

Operation of the power transmission device 1 will be described.
Torque of the car engine is transmitted to the pulley 3 through the V belt. Rotation of the pulley 3 in the direction indicated by an arrow in Figure 1 is transmitted to the rotating shaft 102 of the compressor 100 for use with the car air conditioner through the damper mechanism 6, the torque transmission mechanism 5 and the hub 4.

Torque shock at the start of the car engine and torque fluctuation of the car engine during the power transmission are absorbed by the damper rubbers 62 of the damper mechanism 6. Therefore, the other ends 51d of the arm portions 51b of the plate spring 51 are kept clamped by the clamping portions 53b of the clamping member 53 and the clamping portions 4c of the hub 4. Thus, the torque of the car engine is reliably transmitted to the rotation shaft 102 through the torque transmission mechanism 5. As a result, the compressor 100 of the car air conditioner is reliably run.
When the rotating shaft 102 of the compressor 100 for use with the car air conditioner is overloaded and its rotation is restricted, the other ends 51d of the arm portions 51b of the plate spring 51 are released from the clamping by the clamping portions 53b of the clamping member 53 and the clamping portions 4c of the hub 4, the arm portions 51b of the plate spring 51 are restored to their initial shapes to be distanced from the clamping portions 53b of the clamping member 53 and the clamping portions 4c of the hub 4, and the connection between the pulley 3 and the hub 4 is released. As a result, the compressor 100 is protected from damage.

In the power transmission device 1, the plate spring 51 of the torque transmission mechanism 5 for transmitting the torque from the pulley 3 to the hub 4 exhibits vibration damping function. Therefore, the vibration in the direction along the longitudinal axis of the rotating shaft 102 transmitted from the car engine to the pulley 3 is not easily transmitted from the pulley 3 to the hub 4. As a result, the vibration of the compressor 100 for use with the car air conditioner and the noise generated by the vibration are prevented.

In the aforementioned embodiment, one ends 51c of the arm portions 51b of the plate spring 51 are fixed to the pulley 3 and the other ends 51d of the arm portions 51b of the plate spring are clamped by the clamping portions 53b of the clamping member 53 and the clamping portions 4c of the hub 4. However, it is possible for the plate spring 51 shown in Figure 3 to be turned over, the other ends 51d of the arm portions 51b to be fixed to the pulley 3, and the one ends 51c of the arm portions 51b to be clamped by the clamping portions 53b of the clamping member 53 and the clamping portions 4c of the hub 4. In this case, holes are provided instead of projections 51f and projections are provided instead of holes 51e.
The damping alloy used for the spring plate 51 is not restricted to one of the examples mentioned in the aforementioned embodiment. Any material exhibiting mechanical strength and vibration damping function equal to or higher than those of the example materials can be used.

### Industrial Applicability

The present invention can be applied to a power transmission device for transmitting the torque of an external power source to a driven side piece of equipment.

### Brief Description of the Drawings

Figure 1 is a front view of a power transmission device in accordance with a preferred embodiment of the present invention.
Figure 2 is a sectional view along line II-II in Figure 1.
Figure 3 is a plan view of a plate spring provided in the power transmission device in accordance with the preferred embodiment of the present invention.
Figure 4 is a set of structural views of a clamping member provided in the power transmission device in accordance with the preferred embodiment of the present invention. (a) is a plan view and (b) is a sectional view
Figure 5 is a comparison chart showing the mechanical strengths and vibration damping efficiencies of various alloys.

### Brief Description of the Reference Numerals

1 Power transmission device
2 Bearing
3 Pulley
4 Hub
4c Clamping portion
5 Torque transmission mechanism
51 Plate spring
51b Arm portion
53 Clamping member
6 Damper mechanism
100 Compressor for use with car air conditioner
102 Rotating shaft

## Claims

1. A power transmission device (1) comprising a driving side rotating member (3) in use driven by an external power source, a driven side rotating member (4) in use fixed to a rotating shaft (102) of a driven side piece of equipment (100), and a resiliently deformed plate spring (51) fixed to the driving side rotating member at one end and detachably clamped by the driven side rotating member and a clamping member fixed to the driven side rotating member at the other end **characterized in that** the plate spring (51) is made of damping alloy.

2. A power transmission device comprising a driving side rotating member (3) in use driven by an external power source, a driven side rotating member (4) in use fixed to a rotating shaft (102) of a driven side piece of equipment (100), and a resiliently deformed plate spring (51) fixed to the driven side rotating member at one end and detachably clamped by the driving side rotating member and a clumping member fixed to the driving side rotating member at the other end, **characterized in that** the plate spring (51) is made of damping alloy.

3. A power transmission device of claim 1 or 2, wherein the damping alloy is Mn-Cu alloy.

4. A power transmission device of claim 1 or 2, wherein the damping alloy is Ni-Ti alloy.

5. A power transmission device of claim 1 or 2, wherein the damping alloy is Cu-Al-Ni alloy.

6. A power transmission device of claim 1 or 2, wherein the damping alloy is Cu-Al-Mn alloy.

## Patentansprüche

1. Leistungsübertragungsvorrichtung (1) mit einem antreibenden Drehelement (3) das im Gebrauch durch eine externe Leistungsquelle angetrieben wird, einem angetriebenen Drehelement (4), das im Gebrauch an einer Drehwelle (102) eines angetriebenen Vorrichtungsteils (100) befestigt ist, und einer elastisch verformten Tellerfeder (51), die an dem antreibenden Drehelement an einem Ende befestigt und durch das angetriebene Drehelement und einem an dem angetriebenen Drehelement befestigten Klemmelement an dem anderen Ende lösbar geklemmt ist, **dadurch gekennzeichnet, dass** die Tellerfeder (51) aus einer dämpfenden Legierung besteht.

2. Leistungsübertragungsvorrichtung mit einem antreibenden Drehelement (3), das im Gebrauch durch eine externe Leistungsquelle angetrieben wird, einem angetriebenen Drehelement (4), das im Gebrauch an einer Drehwelle (102) eines angetriebenen Einrichtungsteils (100) befestigt ist, und einer elastisch verformten Tellerfeder (51), die an dem angetriebenen Drehelement an einem Ende befestigt und durch das antreibende Drehelement und einem an dem antreibenden Drehelement befestigten Klemmelement an dem anderen Ende lösbar geklemmt ist, **dadurch gekennzeichnet, dass** die Tellerfeder (51) aus einer dämpfenden Legierung besteht.

3. Leistungsübertragungsvorrichtung gemäß Anspruch 1 oder 2, wobei die dämpfende Legierung eine Mn-Cu-Legierung ist.

4. Leistungsübertragungsvorrichtung gemäß Anspruch 1 oder 2, wobei die dämpfende Legierung eine Ni-Ti-Legierung ist.

5. Leistungsübertragungsvorrichtung gemäß Anspruch 1 oder 2, wobei die dämpfende Legierung eine Cu-Al-Ni-Legierung ist.

6. Leistungsübertragungsvorrichtung gemäß Anspruch 1 oder 2, wobei die dämpfende Legierung eine Cu-Al-Mn-Legierung ist.

## Revendications

1. Dispositif de transmission de puissance (1) comprenant un élément rotatif du côté de l'entraînement (3) entraîné à l'usage par une source de puissance externe, un élément rotatif du côté entraîné (4), fixé à l'usage à un arbre de rotation (102) d'une pièce d'équipement du côté entraîné (100), et un ressort à lames élastiquement déformé (51) fixé sur l'élément rotatif du côté de l'entraînement au niveau d'une extrémité et bloqué de manière détachable par l'élément rotatif du côté entraîné et un élément de serrage fixé sur l'élément rotatif du côté entraîné au niveau de l'autre extrémité, **caractérisé en ce que** le ressort à lames (51) est réalisé à partir d'un alliage amortisseur.

2. Dispositif de transmission de puissance comprenant un élément rotatif du côté de l'entraînement (3) entraîné à l'usage par une source de puissance externe, un élément rotatif du côté entraîné (4), fixé à l'usage à un arbre de rotation (102) d'une pièce d'équipement du côté entraîné (100), et un ressort à lames élastiquement déformé (51) fixé sur l'élément rotatif du côté entraîné au niveau d'une extrémité et bloqué de manière détachable par l'élément rotatif du côté de l'entraînement et un élément de serrage fixé sur l'élément rotatif du côté de l'entraînement au niveau de l'autre extrémité, **caractérisé en ce que** le ressort à lames (51) est réalisé à partir d'un alliage amortisseur.

3. Dispositif de transmission de puissance selon la revendication 1 ou 2, dans lequel l'alliage amortisseur est un alliage de Mn-Cu.

4. Dispositif de transmission de puissance selon la revendication 1 ou 2, dans lequel l'alliage amortisseur est un alliage de Ni-Ti.

5. Dispositif de transmission de puissance selon la revendication 1 ou 2, dans lequel l'alliage amortisseur est un alliage de Cu-Al-Ni.

6. Dispositif de transmission de puissance selon la revendication 1 ou 2, dans lequel l'alliage amortisseur est un alliage de Cu-Al-Mn.
